# EUROPÄISCHE PATENTSCHRIFT

(11) **EP 2 331 840 B1**
(45) Veröffentlichungstag und Bekanntmachung des Hinweises auf die Patenterteilung: **06.11.2013**
(21) Anmeldenummer: 09778664.4
(22) Anmeldetag: 23.09.2009
(51) Int. Cl.: F16D 65/56

(54) **NACHSTELLVORRICHTUNG FÜR EINE SCHEIBENBREMSE**
ADJUSTING DEVICE FOR A DISK BRAKE
DISPOSITIF DE RATTRAPAGE DE JEU POUR FREIN À DISQUE

(30) Priorität: 26.09.2008 DE 102008048922
(43) Veröffentlichungstag der Anmeldung: 15.06.2011
(73) Patentinhaber: Knorr-Bremse Systeme für Nutzfahrzeuge GmbH, 80809 München (DE)
(72) Erfinder: IRASCHKO, Johann, 85201 Schweitenkirchen (DE)
(74) Vertreter: Mattusch, Gundula
(86) Internationale Anmeldenummer: PCT/EP2009/006858
(87) Internationale Veröffentlichungsnummer: WO 2010/034473

(56) Entgegenhaltungen:
- WO-A2-2010/012429
- DE-A1-102005 005 250
- DE-A1-102006 007 684

## Beschreibung

Die Erfindung betrifft eine Nachstellvorrichtung für eine Scheibenbremse, insbesondere pneumatisch betätigte Scheibenbremse, nach dem Oberbegriff des Anspruchs 1.

Nachstellvorrichtungen für Scheibenbremsen gibt es in unterschiedlichen Ausführungen. So zum Beispiel für pneumatisch betätigte Scheibenbremsen, insbesondere in Schiebesattelausführung, als auch für pneumatisch betätigten Fest- oder Schwenksattelscheibenbremsen.

Pneumatisch betätigte Scheibenbremsen gehören mittlerweile zur Standardausrüstung bei schweren Nutzfahrzeugen.

Derartige Scheibenbremsen benötigen zur Erzeugung der geforderten Zuspannkraft, eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 1 und 20:1. Die Kolbenhübe der Bremszylinder bewegen sich zwischen 50 und 75 mm, woraus sich Zuspannwege zum Andrücken der Bremsbeläge an die Bremsscheibe von etwa 4 mm ergeben.

Die Reibmaterialdicke der Bremsbeläge liegt im Bereich von 20 mm. Da 2 Beläge eingebaut sind ergibt sich somit, ohne Berücksichtigung des Scheibenverschleißes, ein Verschleißweg von etwa 40 mm. Dieser Weg ist um ein Vielfaches größer als der oben genannte Zuspannweg. Es besteht daher die Notwendigkeit die Bremse mittels einer Vorrichtung entsprechend dem Belagverschleiß nachzustellen. Stand der Technik ist eine automatisch arbeitende Verschleitinachstellung, womit erreicht wird, dass das so genannte Lüftspiel, damit ist der Spalt zwischen den Bremsbelägen und der Bremsscheibe im unbetätigten Zustand gemeint, unabhängig vom Verschleißzustand und Verschleißverhalten der Bremsbeläge, konstant gehalten wird.

Sehr häufig findet man in Nutzfahrzeugen Scheibenbremsen, welche über einen Nachsteller verfügen, der konzentrisch im Hohlraum eines Gewindestempels angeordnet ist und exzentrisch über ein Antriebselement (z. B.: Schaltfinger, Zahnrad) vom Bremshebel angetrieben wird.

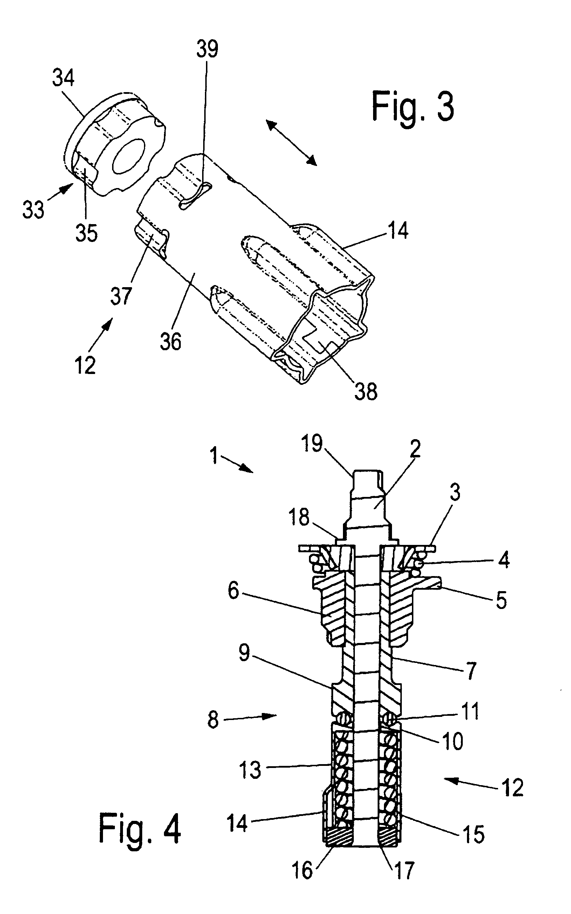

In Fig. 4 ist eine der Anmelderin bekannte derartige Nachstellvorrichtung 1 illustriert. Sie besteht im Wesentlichen aus folgenden Funktionselementen:
- Welle 2 mit Antriebszapfen 19 für ein Rückstellwerkzeug
- Lagerscheibe 3 zur Befestigung an einer Scheibenbremse
- Druckfeder 4 zwischen Lagerscheibe 3 und Schaltgabel 5
- Schaltgabel 5 mit Antriebsring 6
- Lastschalt-/Überlastkupplung 8
- Kupplungshülse 12
- Feder 15

Bei einem Bremsvorgang führt der mit der Kolbenstange des Bremszylinders gekoppelte Bremshebel eine Drehbewegung aus. Bevor über den Koppelmechanismus der Nachstellung (z. B.: Schaltgabel 5 und Schaltfinger oder Zahnräder) die Drehbewegung des Hebels in die Nachstellvorrichtung 1 eingeleitet wird, muss ein so genannter Leerweg überwunden werden. Dieser Weg ist für die Größe des Lüftspiels ausschlaggebend, da während dieser Bewegung die Nachstellung nicht aktiviert wird, und der Zuspannweg damit das Lüftspiel darstellt. Nach Überwinden dieses Leerwegs wird die Nachstellvorrichtung 1 in eine Drehbewegung versetzt, und durch die Koppelung mit dem Gewindestempel bzw. -rohr über die Kupplungshülse 12 wird ein Nachstellvorgang eingeleitet.

Ein wichtiges Element der Nachstellvorrichtung 1 ist die so genannte Kupplungshülse 12. Wie vorher beschrieben wird damit die Drehbewegung der Nachstellvorrichtung 1 in das so genannte Gewinderohr übertragen. Bei der derzeitigen Nachstellvorrichtung 1 gemäß Fig. 4 ist diese Kupplungshülse 12 einteilig mit einem Hülsenkörper 13 ausgeführt. Sie besitzt zwei wesentliche Funktionsabschnitte: An einer Stirnseite verfügt die Kupplungshülse 12 über einen Kupplungsabschnitt 10 mit Taschen zur Aufnahme von Kugeln 11, welche zusammen mit einer Kupplungsbuchse 9 die Lastschalt-/ Überlastkupplung 8 in Ausbildung einer so genannten Kugelrampenkupplung bilden.

Die der Stirnseite der Kupplungshülse 12 gegenüberliegende Seite besitzt in axialer Richtung verlaufende Rippen 14, welche zur Übertragung des Drehmoments auf das Gewinderohr dienen. Im Hohlraum dieser Kupplungshülse 12 befindet sich eine Feder 15, insbesondere Zylinderfeder, welche zur Vorspannung der Kugelrampenkupplung 8 dient. Die Zylinderfeder stützt sich an einer Profilscheibe 16, die von einem Rand der Welle 2 gehalten ist, und dem Kupplungsabschnitt 10 ab. Aufgrund der Bauraumverhältnisse muss die Kupplungshülse 12 relativ dünnwandig ausgeführt sein. Andererseits muss der Kupplungsabschnitt 10 im Bereich der Kugelrampentaschen stirnseitig eine größere Wandstärke aufweisen, um eine ausreichende Festigkeit der Kugeltaschen zu gewährleisten.

Die Erfahrung hat gezeigt, dass die Herstellung dieses Bauteils relativ schwierig ist und bei geringen Prozessabweichungen die Dauerfestigkeit dieses Bauteils beeinträchtigt werden kann. Im Zuge der erhöhten Anforderungen hinsichtlich Wirtschaftlichkeit in Fertigung und Qualität (Wartungsintervalle) bei möglichst geringem Bauraum und erhöhter Festigkeit besteht der Bedarf für eine verbesserte Nachstellvorrichtung.

Die Aufgabe der vorliegenden Erfindung besteht daher darin, eine verbesserte Nachstellvorrichtung zu schaffen.

Die Aufgabe wird durch eine Nachstellvorrichtung mit den Merkmalen des Anspruchs 1 gelöst.
Die Aufgabe wird auch durch eine Scheibenbremse mit den Merkmalen des Anspruchs 8 gelöst.

Demgemäß ist eine Nachstellvorrichtung zur Nachstellung eines Verschleißes von Bremsbelägen und Bremsscheibe einer pneumatisch betätigten Scheibenbremse mit einer drehhebelbetätigten Zuspannvorrichtung, die vorzugsweise in eine Stellspindel der Scheibenbremse einsetzbar und an einem Bremssattel der Scheibenbremse mittels einer Lagerscheibe anbringbar ist, wobei ein Antriebsring axial auf einer Buchse einer Lastschalt-/Überlastkupplung angeordnet ist; die Lastschalt-/Überlastkupplung axial zwischen dem Antriebsring und einer Kupplungshülse für eine Feder angeordnet ist, dadurch gekennzeichnet, dass die Kupplungshülse eine Hülse und einen axial in die Hülse formschlüssig einsetzbaren Kupplungseinsatz der Lastschalt-/Überlastkupplung aufweist.

Dadurch ist es möglich, dass die Herstellung der Kupplungshülse deutlich vereinfacht wird und sich deren Empfindlichkeit gegenüber Prozessschwankungen erheblich reduziert.

Dadurch, dass die Kupplungshülse aus zwei Funktionskomponenten aufgebaut ist, nämlich einer Hülse und einem Kupplungseinsatz, können diese beiden mit den jeweils für sie wirtschaftlichsten und qualitativ besten Verfahren produziert werden. Der Kupplungseinsatz kann auf einfache Weise in die Hülse eingesetzt werden, wobei er mit ihr mittels geeigneter, korrespondierender Profilierungen drehfest formschlüssig verbindbar ist.

Diese Konstruktion bietet folgende Vorteile:
- Anwendung der optimalen Herstellverfahren für die entkoppelten Funktionskomponenten: zum Beispiel Sintern oder Kaltfließpressen für den Kupplungseinsatz und Blechumformen für die Hülse.
- Gegenüber dem Stand der Technik erhöhte Wirtschaftlichkeit durch größere Lieferantenauswahl und optimierte Herstellprozesse.
- Erhöhung der Robustheit durch die Anwendung von bauteilgerechten Fertigungsverfahren für die beiden unterschiedlichen Komponenten.

In bevorzugter Ausführung ist die Lastschalt-/Überlastkupplung als Kugelrampenkupplung mit Kugeln ausgebildet, wobei die Kugeln in Kugeltaschen an einer Stirnseite des einsetzbaren Kupplungseinsatzes aufnehmbar sind. Durch die Funktionsentkopplung kann somit der Kupplungseinsatz für die Kugeln entsprechend einfacher bearbeitet werden als es im Stand der Technik der Fall ist.

Weiterhin ist vorgesehen, dass die Kupplungshülse eine Druckscheibe für die Feder aufweist. Dazu ist es vorteilhaft, dass das Innenprofil der Hülse eine axiale Arretierung für die Druckscheibe bildet.

Zur Herstellung der Hülse sind verschiedene Verfahren möglich, wie zum Beispiel Ziehprozess. In bevorzugter Ausführung ist die Hülse als gerolltes Stanz-Biegeteil mit einer Verbindung in Längsrichtung ausgebildet. Die Verbindung kann zum Beispiel eine Schweißnaht oder eine formschlüssige Verzahnung sein, andere Ausführungen sind ebenfalls möglich.

Eine Scheibenbremse, insbesondere pneumatisch betätigte Scheibenbremse, weist eine Nachstellvorrichtung nach der oben stehenden Beschreibung auf.

Die Erfindung wird nun anhand einer beispielhaften Ausführung mit Bezug auf die beigefügten Zeichnungen näher erläutert. Hierbei zeigen:
- Fig. 1: eine schematische Darstellung eines Ausführungsbeispiels einer erfindungsgemäßen Nachstellvorrichtung;
- Fig. 2: eine Längsschnittdarstellung des Ausführungsbeispiels nach Fig. 1;
- Fig. 3: eine vergrößerte perspektivische Darstellung einer Kupplungshülse nach Fig. 1 und 2;
- Fig. 4: eine schematische Längsschnittdarstellung einer bekannten Nachstellvorrichtung; und
- Fig. 5: eine schematische Darstellung einer Scheibenbremse.

In den Figuren sind Bauteile, die gleiche oder ähnliche Funktionen aufweisen, mit gleichen Bezugszeichen versehen.

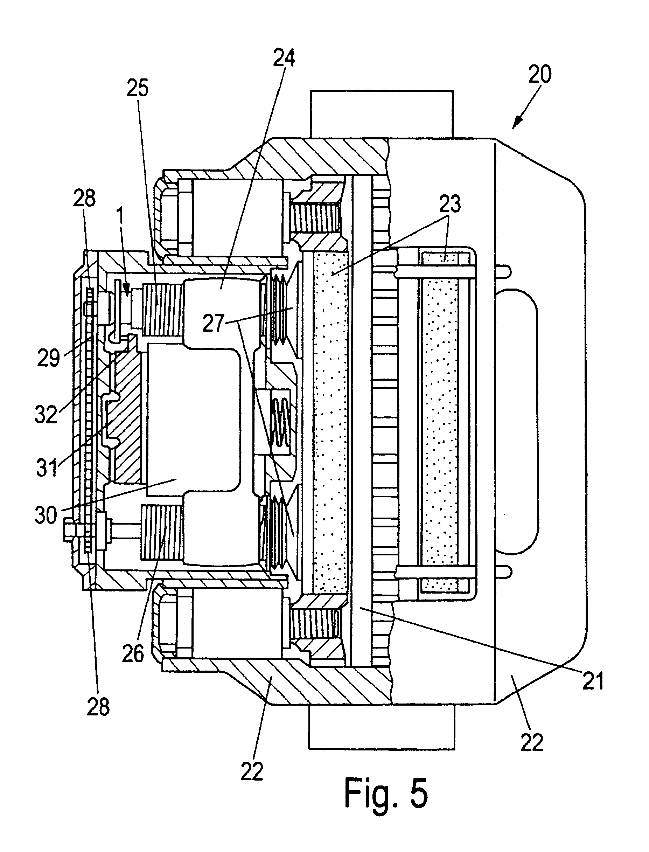

Zu Aufbau und Funktion einer pneumatischen Scheibenbremse nach Fig. 5 wird auf die entsprechende Beschreibung der DE 197 29 024 C1 verwiesen. In der Fig. 5 sind hier die folgenden Komponenten angegeben: Scheibenbremse 20, Bremsscheibe 21, Bremssattel 22, Bremsbeläge 23, Traverse 24, Stellspindeln 25 und 26, Druckstücke 27, Kettenräder 28, Kette 29, Exzenter 30 und Drehhebel 31, welcher ein Antriebselement 32 aufweist, das mit einer Schaltgabel 5 einer Nachstellvorrichtung 1 in Zusammenwirkung steht. Die Nachstellvorrichtung 1 ist hier in der Stellspindel 25 angeordnet. Eine derartige Nachstellvorrichtung 1 wird nun näher erläutert. Die Nachstellvorrichtung 1 wäre auch für eine elektromotorisch betätigte Scheibenbremse geeignet.

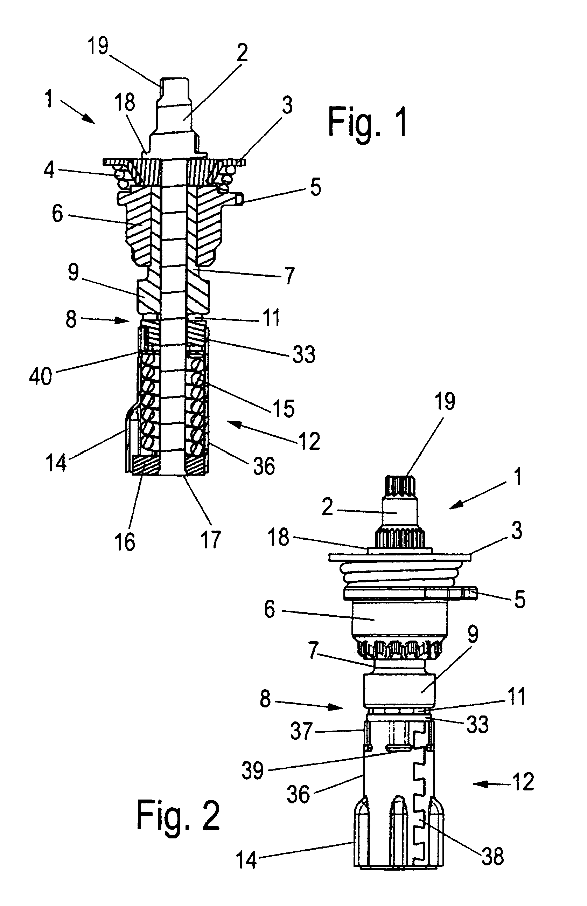

Fig. 1 ist eine schematische Darstellung eines Ausführungsbeispiels einer erfindungsgemäßen Nachstellvorrichtung 1 und Fig. 2 zeigt eine Längsschnittdarstellung des Ausführungsbeispiels nach Fig. 1.

Die Nachstellvorrichtung 1 weist Folgendes auf: eine Welle 2 mit einem Antriebszapfen 19 mit einer entsprechenden Profilierung für ein Werkzeug und einem Kragen 18 an ihrem oberen Ende; eine Lagerscheibe 3 zur Befestigung der Nachstellvorrichtung 1 im Bremssattel 22 (siehe Fig. 5); eine Buchse 7, die sich axial an die Lagerscheibe 3 anschließt und einen Antriebsring 6 trägt, der mit einer Schaltgabel 5 verbunden ist, die mit dem Antriebselement 32 (siehe Fig. 5) des Drehhebels 31 gekoppelt ist; eine Lastschalt-/Überlastkupplung 8, die in diesem Beispiel als Kugelrampenkupplung ausgebildet ist und über Kugeln 11 mit einem Kupplungseinsatz 33 einer Kupplungshülse 12 zusammenwirkt; eine Feder 15, die als Zylinderfeder in der Kupplungshülse 12 zwischen einer Druckscheibe 40 und einer Profilscheibe 16 angeordnet ist, wobei die Profilscheibe 16 an einem Rand 17 der Welle 2 axial aufliegt. Die Feder 15 dient zum axialen Zusammenhalt der Elemente der Nachstellvorrichtung 1 und zur Vorspannung der Lastschalt-/Überlastkupplung 8 und kann zum Beispiel mittels einer Profilierung des Kragens 18, der sich auf der Lagerscheibe 3 abstützt und mit der Welle 2 als Einstellelement über ein Gewinde zusammenwirkt, mit einem Werkzeug eingestellt werden. Dies ist möglich, da die Druckscheibe 40 in der Kupplungshülse 12 axial festgelegt ist.

Die Kugelrampenkupplung besteht aus einer Kupplungsbuchse 9, die ein unteres Ende der Buchse 7 bildet, Kugeln 11 als Wälzkörpern und dem Kupplungseinsatz 33. Die Kugeln 11 sind in Kugeltaschen in der Stirnseite der Kupplungsbuchse 9 und einer Stirnseite 34 (siehe Fig. 3) des Kupplungseinsatzes 33 aufgenommen.

Die Kupplungshülse 12 besteht erfindungsgemäß im Unterschied zu der eingangs beschriebenen Nachstellvorrichtung nach Fig. 4 aus zwei Funktionskomponenten. Die Kupplungshülse 12 weist dazu eine Hülse 36 und den Kupplungseinsatz 33 auf, welcher in das axiale Ende der Hülse 36, welches zur Lastschalt-/Überlastkupplung 8 weist, einsetzbar ist. Das andere axiale Ende der Hülse 36 ist mit in axialer Richtung verlaufenden Rippen 14 versehen, die zur Drehmomentübertragung auf die Stellspindel 25, 26 dienen. In diesem Ausführungsbeispiel ist die Hülse 36 relativ dünnwandig ausgebildet. Sie kann zum Beispiel ein Stanz-Biegeteil aus Metallblech sein, welches nach bei einem Umformvorgang zu einer Hülse gerollt und in Längsrichtung mittels einer Verbindung 38 verbunden wird. Die Verbindung 38 ist hier als formschlüssige Verzahnung ausgebildet, kann aber auch anders gestaltet sein. Ebenfalls ist es möglich, die Hülse 36 als Ziehformteil herzustellen.

Das zur Lastschalt-/Überlastkupplung 8 weisende axiale Ende der Hülse 36 ist mit einem Innenprofil 37 versehen, welches mit einem dazu korrespondierenden Außenprofil 35 des Kupplungseinsatzes 33 zusammenwirkt. Hierzu zeigt Fig. 3 eine schematische perspektivische Darstellung der Kupplungshülse 12 mit Hülse 36 und noch nicht eingesetztem Kupplungseinsatz 33. Das Innenprofil 37 der Hülse 36 ist hier durch radiales Eindrücken von am Umfang verteilten Wandabschnitten des Hülsenendes gebildet. Hierzu sind unterhalb der eingedrückten Wandabschnitte Ausnehmungen 39 vorgesehen, welche die Formung erleichtern und ein gleichmäßiges Innenprofil 23 gestatten. Der Kupplungseinsatz 33 weist hierzu korrespondierende Ausnehmungen als Außenprofil 35 auf. Die Profile 35, 37 erstrecken sich in axialer Richtung der Kupplungshülse 12, wodurch ein Einsetzen des Kupplungseinsatzes 33 in axialer Richtung (Doppelpfeil) in die Hülse 36 und ein formschlüssiger, drehfester Sitz ermöglicht ist. Eine axiale Begrenzung des Kupplungseinsatzes 33 in der Hülse 36 ist hier durch einen nicht unterbrochenen Ring der Stirnseite 34 des Kupplungseinsatzes 33 gebildet.

Die Profile 35, 37 gestatten einen leichten Ein- und Ausbau des Kupplungseinsatzes 33 und eine einfache Herstellung.

Die Ausnehmungen 39 ermöglichen es weiterhin, die Unterkanten der eingedrückten Wandabschnitte der Hülse 36 so auszubilden, dass diese einen axialen Anschlag für die Druckscheibe 40 bilden.

Aus Fig. 3 ist ersichtlich, dass die Hülse 36 dünnwandig ausgebildet ist, wobei der Kupplungseinsatz 33 der Funktion der zu übertragenden Kräfte der Lastschalt/Überlastkupplung 8 entsprechend groß dimensionierbar ist. Der Kupplungseinsatz 33 ist aufgrund unterschiedlicher Werkstoffwahl (z.B. Sinterteil) zur Hülse 36 entsprechend unterschiedlich bearbeitbar (zum Beispiel Wärmebehandlung), um zum Beispiel die Laufflächen und Kugeltaschen der Kugeln 11 zu gestalten.

Die Erfindung ist nicht auf die oben beschriebenen Ausführungsbeispiele beschränkt. Sie ist im Rahmen der beigefügten Ansprüche modifizierbar.

So kann zum Beispiel die axiale Begrenzung des Kupplungseinsatzes 33 in der Hülse 36 durch eine entsprechende Formung durch Eindrücken der Unterkanten der Ausnehmungen 39 gebildet sein.

Die Druckscheibe 40 kann auch auf andere Art und Weise axial in der Hülse 36 festgelegt werden, zum Beispiel mittels Sicken in der Hülsenwand.

Die Außen- und Innenprofile 35, 37 können auch andere Formen aufweisen, wie zum Beispiel eine Kerbverzahnung oder dergleichen.

### Bezugszeichenliste

- 1: Nachstellvorrichtung
- 2: Welle
- 3: Lagerscheibe
- 4: Druckfeder
- 5: Schaltgabel
- 6: Antriebsring
- 7: Buchse
- 8: Lastschalt-/Überlastkupplung
- 9: Kupplungsbuchse
- 10: Kupplungsabschnitt
- 11: Kugel
- 12: Kupplungshülse
- 13: Hülsenkörper
- 14: Rippe
- 15: Feder
- 16: Profilscheibe
- 17: Rand
- 18: Kragen
- 19: Antriebszapfen
- 20: Scheibenbremse
- 21: Bremsscheibe
- 22: Bremssattel
- 23: Bremsbeläge
- 24: Traverse
- 25: Erste Stellspindel
- 26: Zweite Stellspindel
- 27: Druckstück
- 28: Kettenräder
- 29: Kette
- 30: Exzenter
- 31: Drehhebel
- 32: Antriebselement
- 33: Kupplungseinsatz
- 34: Stirnseite
- 35: Außenprofil
- 36: Hülse
- 37: Innenprofil
- 38: Verbindung
- 39: Ausnehmung
- 40: Druckscheibe

## Patentansprüche

1. Nachstellvorrichtung (1) zur Nachstellung eines Verschleißes von Bremsbelägen (23) und Bremsscheibe (21) einer pneumatisch betätigten Scheibenbremse (20) mit einer drehhebelbetätigten Zuspannvorrichtung, die vorzugsweise in eine Stellspindel (25) der Scheibenbremse (20) einsetzbar und an einem Bremssattel (22) der Scheibenbremse (20) mittels einer Lagerscheibe (3) anbringbar ist, wobei
(a) ein Antriebsring (6) axial auf einer Buchse (7) einer Lastschalt/Überlastkupplung (8) angeordnet ist;
(b) die Lastschalt-Überlastkupplung (8) axial zwischen dem Antriebsring (6) und einer Kupplungshülse (12) für eine Feder (15) angeordnet ist,
**dadurch gekennzeichnet, dass**
(c) die Kupplungshülse (12) eine Hülse (36) und einen axial in die Hülse (36) formschlüssig einsetzbaren Kupplungseinsatz (33) der Lastschalt-/Überlastkupplung (8) aufweist.

2. Nachstellvorrichtung (1) nach Anspruch 1, **dadurch gekennzeichnet, dass** die Lastschalt-/Überlastkupplung (8) als Kugelrampenkupplung mit Kugeln (11) ausgebildet ist.

3. Nachstellvorrichtung (1) nach Anspruch 2, **dadurch gekennzeichnet, dass** der in die Hülse (36) formschlüssig einsetzbare Kupplungseinsatz (33) an einer Stirnseite (34) Kugeltaschen zur Aufnahme der Kugeln (11) aufweist.

4. Nachstellvorrichtung (1) nach einem der vorhergehenden Ansprüche, **dadurch gekennzeichnet, dass** der Kupplungseinsatz (33) ein Außenprofil (35) aufweist, welches mit einem Innenprofil (37) der Hülse (36) korrespondiert.

5. Nachstellvorrichtung (1) nach einem der vorhergehenden Ansprüche, **dadurch gekennzeichnet, dass** die Kupplungshülse (12) eine Druckscheibe (40) für die Feder (15) aufweist.

6. Nachstellvorrichtung (1) nach Anspruch 5, **dadurch gekennzeichnet, dass** das Innenprofil (37) der Hülse (36) eine axiale Arretierung für die Druckscheibe (40) bildet.

7. Nachstellvorrichtung (1) nach einem der vorhergehenden Ansprüche, **dadurch gekennzeichnet, dass** die Hülse (36) als gerolltes Stanz-Biegeteil mit einer Verbindung (38) in Längsrichtung ausgebildet ist.

8. Scheibenbremse (20), insbesondere pneumatisch betätigte Scheibenbremse, mit einer Nachstellvorrichtung (1) nach einem der vorhergehenden Ansprüche.

## Claims

1. Adjusting device (1) for adjustment of the wear on brake linings (23) and the brake disc (21) of a pneumatically operated disc brake (20) with an application device operated by a rotating lever, which is preferably adapted for insertion into an adjusting spindle (25) of said disc brake (20) and which is capable of being mounted in a brake calliper (22) of said disc brake (20) by means of a thrust bearing disc (3), wherein
(a) a driving ring (6) is axially disposed on a bearing race (7) of a load-switching/overload clutch (8);
(b) said load-switching/overload clutch (8) is axially disposed between said driving ring (6) a coupling sleeve (12) for a spring (15),
**characterised in**
(c) **that** said coupling sleeve (12) comprises a sleeve (36) and a coupler insert (33) of said load-switching/overload clutch (8) adapted to be inserted in a form-locking manner into said sleeve (36).

2. Adjusting device (1) according to Claim 1, **characterised in that** said load-switching/overload clutch (8) is configured in the form of a ball-ramp clutch with spheres (11).

3. Adjusting device (1) according to Claim 2, **characterised in that** said coupler insert (33), which is adapted for insertion in a form-locking manner into said sleeve (36), presents spherical pockets having a surface (34) for the accommodation of spheres (11).

4. Adjusting device (1) according to any of the preceding Claims, **characterised in that** said coupler insert (33) presents an outside profile (35) that corresponds to an inside profile (37) of said sleeve (36).

5. Adjusting device (1) according to any of the preceding Claims, **characterised in that** said coupler sleeve (12) comprises a thrust plate (40) for said spring (15).

6. Adjusting device (1) according to Claim 5, **characterised in that** said inside profile (37) of said sleeve (36) constitutes an axial locking element for said thrust plate (40).

7. Adjusting device (1) according to Claim 5 or 6, **characterised in that** said sleeve (36) is configured in the form of a punched/bent element having a connection (38) along the longitudinal direction.

8. Disc brake (20), in particular a pneumatically operated disc brake, comprising an adjusting device (1) according to any of the preceding Claims.

## Revendications

1. Dispositif de rattrapage de jeu (1) pour le rattrapage de l'usure des garnitures de frein (23) et du disque de frein (21) d'un système de freinage (20) à commande pneumatique, comprenant un dispositif de serrage, commandé par un levier rotatif, qui est apte, de préférence, à être inséré dans un vis de réglage (25) dudit frein à disque (20) et à être monté à un étrier de frein (22) dudit frein à disque (20) moyennant un support rondelle, dans lequel
(a) un anneau moteur (6) est disposé axialement sur un coussinet (7) d'un dispositif d'accouplement à coupure de charge/par surcharge (8);
(b) ledit dispositif d'accouplement à coupure de charge/par surcharge (8) est disposé axialement entre ledit anneau moteur (6) et un manchon d'accouplement (12) pour un ressort (15),
**caractérisé en ce**
(c) **que** ledit manchon d'accouplement (12) comprend un manchon (36) et un insert d'accouplement (33) dudit dispositif d'accouplement à coupure de charge/par surcharge (8), qui est apte à être inséré à ajustement de forme dans ledit manchon.

2. Dispositif de rattrapage de jeu (1) selon la revendication 1, **caractérisé en ce que** ledit dispositif d'accouplement à coupure de charge/par surcharge (8) est configuré sous forme d'un dispositif d'accouplement à rampe de sphères avec des sphères (11).

3. Dispositif de rattrapage de jeu (1) selon la revendication 2, **caractérisé en ce que** ledit insert d'accouplement (33) apte à être inséré à ajustement de forme dans ledit manchon (36) comprend des poches sphériques à une face (34) pour le logement des sphères (11).

4. Dispositif de rattrapage de jeu (1) selon une quelconque des revendications précédentes, **caractérisé en ce que** ledit insert d'accouplement (33) présente un profil extérieur (35), qui correspond à un profil intérieur (37) dudit manchon (36).

5. Dispositif de rattrapage de jeu (1) selon une quelconque des revendications précédentes, **caractérisé en ce que** ledit manchon d'accouplement (12) comprend un disque de poussée (40) pour ledit ressort (15).

6. Dispositif de rattrapage de jeu (1) selon la revendication 5, **caractérisé en ce que** ledit profil intérieur (37) dudit manchon (36) constitue un arrêt axial pour ledit disque de poussée (40).

7. Dispositif de rattrapage de jeu (1) selon la revendication 5 ou 6, **caractérisé en ce que** ledit manchon (36) est configuré sous forme d'une pièce découpée/pliée à une liaison (38) en sens longitudinal.

8. Frein à disque (20), en particulier un frein à disque à commande pneumatique, comprenant un dispositif de rattrapage de jeu (1) selon une quelconque des revendications précédentes.
